# EUROPEAN PATENT APPLICATION

(11) **EP 4 749 955 A1**
(43) Date of publication of application: **27.05.2026**
(21) Application number: 24215249.4
(22) Date of filing: 25.11.2024
(51) Int. Cl.: H04B 10/61, H01S 5/026, H04B 10/69

(54) **OPTICAL RECEIVER WITH INTEGRATED TRANSIMPEDANCE AMPLIFIER**

(71) Applicant: Avago Technologies International Sales Pte. Limited, Singapore 768923 (SG)
(72) Inventor: Zhang, Jiawen, Irvine, 92618 (US); Cui, Delong, Irvine, 92618 (US); Momtaz, Afshin, Irvine, 92618 (US); Cao, Jun, Irvine, 92618 (US)
(74) Representative: Dilg, Haeusler, Schindelmann Patentanwaltsgesellschaft mbH

(57) **Abstract**

An optical receiver unit (110) is described, the unit comprising: an anode terminal (PDA) configured to be connected to an anode of a photodiode, a cathode terminal (PDK) configured to be connected to a cathode of the photodiode, a transimpedance amplifier (TIA) having an input and an output, a first electrically conductive structure (112) coupling the anode terminal to the input, and a second electrically conductive structure (114) coupling the cathode terminal to a bias voltage supply (LDO), the second electrically conductive structure comprising two conductive lines (1141, 1142) extending on opposite sides of the first electrically conductive structure. Furthermore, an optical receiver module comprising a plurality of such units and a method of manufacturing the units are described.

## Description

### TECHNICAL FIELD

The present disclosure relates to the field of optical communication devices, in particular to optical receivers with integrated transimpedance amplifier and digital signal processor.

### BACKGROUND

In known receivers for optical communication systems, a transimpedance amplifier (TIA) is typically used to convert the current generated by a photodiode (PD) into a voltage that is supplied to and processed by a processing unit, such as a digital signal processor (DSP). Many receivers have several channels (or lanes), each including its own photodiode and TIA. Since the connection between PD and TIA is single-ended, efficient isolation between neighboring channels is required in order to avoid crosstalk and other disturbing effects. In conventional designs that utilize stand-alone TIAs, i.e., TIAs that are separate from the DSPs, the required isolation can be obtained by ground shielding each TIA channel, e.g., by utilizing ground pins available within the receiver optical sub-assembly (ROSA), which offers the necessary space for the corresponding connections. However, moving towards an integrated design where the TIAs are integrated with the DSPs, e.g. using CMOS technology, limitations on space and channel pitch does not allow for similar shielding and isolation between neighboring TIAs.

There may thus be a need for a way of overcoming the above problems.

### SUMMARY

This need may be met by the subject matter of the appended independent claims. Further advantageous features are set forth in the dependent claims.

According to a first aspect, there is provided an optical receiver unit, the unit comprising: (a) an anode terminal configured to be connected to an anode of a photodiode, (b) a cathode terminal configured to be connected to a cathode of the photodiode, (c) a transimpedance amplifier having an input and an output, (d) a first electrically conductive structure coupling the anode terminal to the input, and (e) a second electrically conductive structure coupling the cathode terminal to a bias voltage supply, the second electrically conductive structure comprising two conductive lines extending on opposite sides of the first electrically conductive structure.

This aspect of the invention is based on the idea that the first electrically conductive structure and second electrically conductive structure - the latter comprising two conductive lines extending on opposite sides of the first electrically conductive structure - effectively reduces the electromagnetic field radiated by the unit when current flows in the first and second electrically conductive structures. Thereby, coupling with other nearby units can be reduced to such an extent that ground shielding is not necessary. As a result, a very compact unit is obtained, in particular as far as the interconnection between the transimpedance amplifier (TIA) and a photodiode is concerned. The compact unit is thus well-protected against crosstalk with other nearby units.

In the present context, the term "terminal" as used in "anode terminal" and "cathode terminal" may in particular denote a terminal, a connector, or another structural feature or means that is suitable for being connected to a photodiode. In some embodiments, the "anode terminal" and "cathode terminal" may comprise solder bumps.

In the present context, the term "electrically conductive structure" may in particular denote a structure made of electrically conductive material that is shaped and/or arranged to allow an electric current to flow in a predetermined manner, e.g., between certain points and/or along one or more paths.

According to an exemplary embodiment, the two conductive lines form two electrically parallel connections between the cathode terminal and the bias voltage supply.

In other words, each of the two conductive lines forms a separate electrical connection between the cathode terminal and the bias voltage supply, and each of these separate electrical connections conduct a part of the total electric current flowing between the bias voltage supply and the cathode terminal.

According to a further exemplary embodiment, a distance between each of the two conductive lines and the first electrically conductive structure is substantially the same.

In other words, the two conductive lines extend substantially in parallel, and the first electrically conductive structure is arranged substantially in the middle between them.

According to a further exemplary embodiment, each of the two conductive lines is configured to carry half the amount of current carried by the first electrically conductive structure.

In other words, each of the two conductive lines is designed to have the same electrical properties, in particular to have about the same resistance. For example, the two conductive lines may be made from the same material and have the same width, length, and thickness.

According to a further exemplary embodiment, one of the two conductive lines and the first electrically conductive structure form a first current loop, and the other one of the two conductive lines and the first electrically conductive structure form a second current loop.

In other words, an incoming current will flow from the anode terminal and through the first conductive structure towards the input of the TIA, while respective return currents will flow from the bias voltage supply through each of the two conductive lines towards the cathode terminal.

According to a further exemplary embodiment, the first current loop and the second current loop have opposite directions.

Having two current loops with opposite current directions significantly reduces potentially disturbing electromagnetic fields. Due to the oppositely directed currents, the field induced by one current loop will be substantially cancelled by the field induced by the other current loop.

According to a further exemplary embodiment, the unit further comprises a digital signal processor configured to process a signal provided at the output of the transimpedance amplifier.

In other words, the digital signal processor (DSP) receives the voltage provided by the TIA output and processes it, e.g., to derive information modulated onto the signal as known in the art.

According to a further exemplary embodiment, the transimpedance amplifier and the digital signal processor form an integrated circuit, in particular an integrated CMOS circuit.

The integrated circuit with both DSP and TIA is very compact, low-cost to manufacture, and low-power in operation, in particular in comparison to known realizations that utilize a separate or stand-alone TIA which has to be connected to the DSP.

According to a further exemplary embodiment, the transimpedance amplifier and the bias voltage supply are formed on the same die.

Forming the bias voltage supply on the same die as the TIA (and possibly the DSP) further adds to the compactness of the unit.

According to a further exemplary embodiment, the bias voltage supply comprises a low-dropout regulator.

A low-dropout regulator is a simple and useful means for providing the desired reverse bias voltage to a photodiode.

According to a further exemplary embodiment, no grounding capacitor is provided at the cathode terminal.

The reduced coupling and radiation achieved by the first and second electrically conductive structures is sufficient. Hence, a grounding capacitor, at the cathode terminal (also referred to as a decap) is not needed and might - in addition to taking up space and requiring a more complex device - even cause more harm than good.

According to a further exemplary embodiment, the first electrically conductive structure and/or the second electrically conductive structure are configured to provide an impedance of at least 80Ω, said impedance having an inductive part configured to improve bandwidth and reduce input referred noise.

By configuring the electrically conductive structure(s) to provide an impedance of 80Ω or more, which is more than the traditional 50Ω, the resulting inductance may separate parasitic capacitances in photodiode and TIA and thus work as a series peaking at the input of the TIA, thereby improving the bandwidth of the TIA. Furthermore, the inductance may create a pole at the input, effectively reducing the integrated TIA noise current referred to the input.

According to a second aspect, there is provided an optical receiver module comprising a plurality of optical receiver units according to the first aspect or any one of the above exemplary embodiments, wherein each optical receiver unit of the plurality of optical receiver units provide a corresponding channel.

The module according to this aspect benefits from the advantages described with regard to the first aspect and corresponding exemplary embodiments. In particular, it allows for a compact, integrated structure with very low crosstalk between the channels.

According to a further embodiment, the module further comprises a plurality of photo diodes.

The photo diodes complete the module to work as an optical receiver.

According to a third aspect, there is provided a method of manufacturing an optical receiver unit, the method comprising: (a) providing an anode terminal configured to be connected to an anode of a photodiode, (b) providing a cathode terminal configured to be connected to a cathode of the photodiode, (c) providing a transimpedance amplifier having an input and an output, (d) providing a first electrically conductive structure coupling the anode terminal to the input, and (e) providing a second electrically conductive structure coupling the cathode terminal to a bias voltage supply, the second electrically conductive structure comprising two conductive lines extending on opposite sides of the first electrically conductive structure.

The third aspect is essentially based on the same idea as described above in conjunction with the first aspect. More specifically, the third aspect provides a method of manufacturing an advantageous optical receiver unit with the beneficial features and characteristics described above.

### BRIEF DESCRIPTION OF THE DRAWINGS

Fig. 1 is a schematic diagram illustrating electromagnetic coupling between two optical receiver units.
Fig. 2 shows a schematic illustration of electrical currents and induced magnetic fields in the units shown in Fig. 1.
Fig. 3 is a schematic diagram of an optical receiver unit according to an exemplary embodiment.
Fig. 4 shows a schematic illustration of electrical currents and induced magnetic fields in two units corresponding to the exemplary embodiment shown in Fig. 3.
Fig. 5 shows a schematic diagram of an optical receiver unit according to an exemplary embodiment.
Fig. 6 shows plots illustrating improvements in bandwidth and input referred noise in an optical receiver unit according to an exemplary embodiment.
Fig. 7 shows a schematic diagram illustrating the impact of decaps at the photodiode cathode terminals in an optical receiver module.

### DETAILED DESCRIPTION

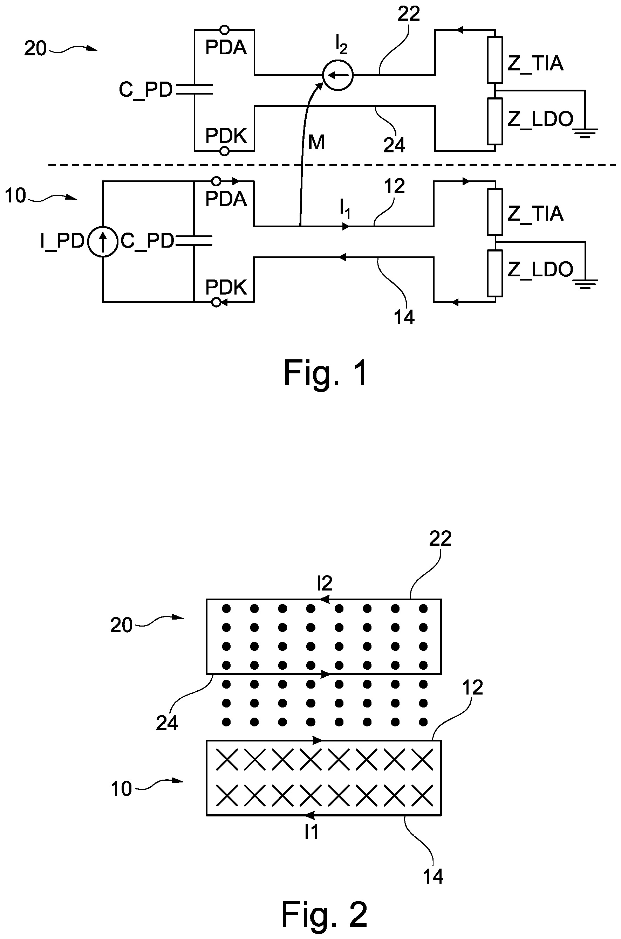

Fig. 1 is a schematic diagram illustrating electromagnetic coupling between two optical receiver units 10, 20 arranged close to each other, such as neighboring units in a multichannel optical receiver.

The lower optical receiver unit 10 comprises an anode terminal PDA and a cathode terminal PDK for respectively connecting with anode and cathode of a photodiode (PD). The unit 10 further comprises a transimpedance amplifier (TIA). The TIA is represented by its input impedance Z_TIA. As known in the art, the TIA is a device capable of converting an input current to an output voltage and is particularly useful in optical receivers where the current generated by a photodiode is very small. The unit 10 further comprises a first electrical connection 12 coupling the anode terminal PDA to the input of the TIA, and a second electrical connection 14 coupling the cathode terminal PDK to a low-dropout voltage regulator (LDO). The LDO is schematically represented as a corresponding impedance Z_LDO, which shares the same ground with Z_TIA, and provides a reverse bias voltage for a photodiode connected to the terminals PDA, PDK. Such a photodiode is schematically represented by a capacitance C_PD in parallel with a current source I_PD.

The upper optical receiver unit 20 is similar to the lower optical receiver unit 10 and accordingly comprises an anode terminal PDA, a cathode terminal PDK, a TIA, a first electrical connection 22, and a second electrical connection 24. The first electrical connection 22 couples the anode terminal PDA to an input of the TIA which is represented by an impedance Z_TIA. The second electrical connection 24 couples the cathode terminal PDK to an LDO which is represented by an impedance Z_LDO.

The current source I_PD in the lower unit 10 represents the current generated by the PD when it is exposed to incoming light. This current runs from the anode terminal PDA to the input of the TIA - as indicated by the arrow I₁ in the first electrical connection 12 - and returns through the second electrical connection 14. This current in the lower unit 10 causes induction of a magnetic field which in turn causes induction of a current in the upper unit 20. This is illustrated by arrow M and current source I₂ in the first electrical connection 22. The induced current I₂ will cause a disturbance in the upper unit 20, i.e. crosstalk. The coupling causing undesirable crosstalk is schematically illustrated in Fig. 2 which shows how the current I₁ in a current loop formed by first and second electrical connections 12, 14 of the lower unit 10 induces a magnetic field that in turn induces oppositely directed current I₂ in a current loop formed by the first and second electrical connections 22, 24 of the upper unit 20.

The present invention has been made to reduce the problem of crosstalk in a compact and simple manner. This is particularly advantageous as it allows for integration of the transimpedance amplifier and digital signal processor, e.g. in a C-MOS device.

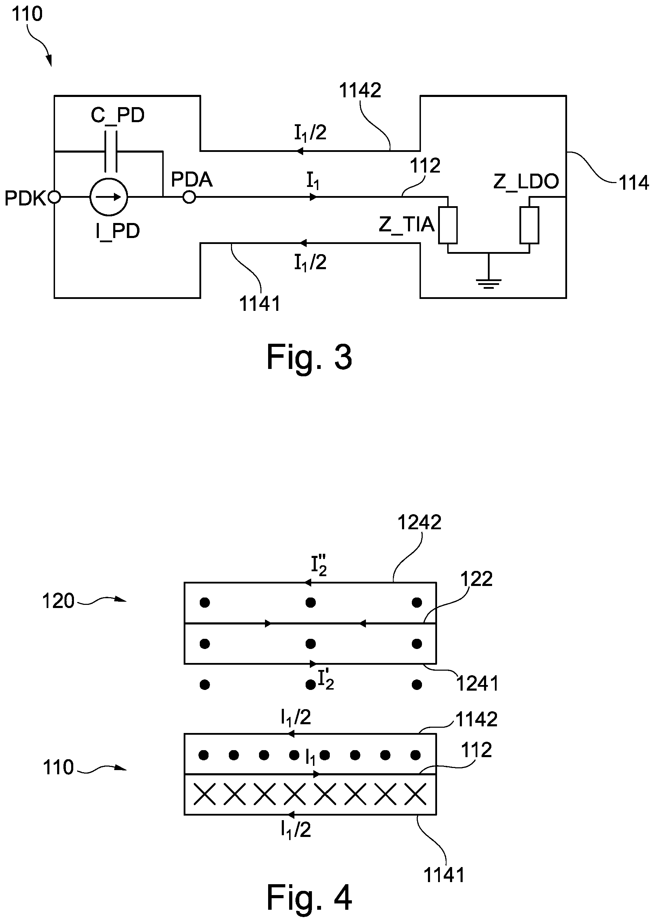

Fig. 3 is a schematic diagram of an optical receiver unit 110 according to an exemplary embodiment. The optical receiver unit 110 comprises an anode terminal PDA and a cathode terminal PDK for respectively connecting with anode and cathode of a photodiode (PD). The unit 10 further comprises a transimpedance amplifier (TIA). The TIA is represented by its input impedance Z_TIA. As known in the art, the TIA is a device capable of converting an input current to an output voltage and is particularly useful in optical receivers where the current generated by a photodiode is very small. The unit 110 further comprises a first electrically conductive structure 112 coupling the anode terminal PDA to the input of the TIA, and a second electrically conductive structure 114 coupling the cathode terminal PDK to a low-dropout voltage regulator (LDO). The LDO is schematically represented as a corresponding impedance Z_LDO, which shares the same ground with Z_TIA, and provides a reverse bias voltage for a photodiode connected to the terminals PDA, PDK. Such a photodiode is schematically represented by a capacitance C_PD in parallel with a current source I_PD. As shown, the first electrically conductive structure 112 is formed as a single electrical conductor between the anode terminal PDA and the TIA, while the second electrically conductive structure 114 comprises two conductive lines (traces) 1141, 1142 extending on opposite sides of the first electrically conductive structure 112. As shown, the optical receiver unit 110 in particular differs from the units 10, 20 shown in Fig. 1 and discussed above in that it has two parallel electrical connections 1141, 1142 between the cathode terminal PDK and the bias voltage supply LDO, one conductive line 1141 below the single conductor 112 and another conductive line 1142 above the single conductor 112. This structure with two parallel current return paths on opposite sides of the single conductor 112 significantly reduces the induced magnetic field and resulting crosstalk from coupling between nearby units.

This is shown schematically in Fig. 4 which shows electrical currents and induced magnetic fields in two nearby units 110, 120 that both have the structure shown in Fig. 3 and discussed above. As shown in the lower part of Fig. 4, the single conductor 112 of the lower unit 110 carries a current I₁ as a result of light impinging onto the photodiode PD while the return current is evenly distributed across the two conductive lines 1141, 1142. In this way, two current loops are formed in the lower unit 110. That is, the single conductor 112 forms a first current loop with one of the two conductors, e.g. with the lower one 1141, and forms a second current loop with the other one of the two conductors 1141, 1142, e.g., with the upper one 1142. As shown, these current loops have opposite directions and thus also induce oppositely directed magnetic fields, which neutralize each other to a large extent, if not completely. Provided that the two lines 1141, 1142 are as close to being identical in terms of electrical resistance as possible, the respective currents will be very close to equal, i.e. half the current I₁ from the photodiode: I₁/2.

Therefore, only a relatively weak field will result and be capable of inducing currents in the corresponding current loops in the nearby unit 120 as shown in the upper part of Fig. 4. Furthermore, the small currents induced in the "victim" unit 120 will also run in two oppositely directed loops and therefore further neutralize crosstalk.

The effective suppression of crosstalk achieved with the structure shown in Fig. 3 allows for integration of the TIA with a DSP in a single integrated device, such as a CMOS device, which does not provide room for ground shielding to suppress crosstalk.

As discussed above, the two connections or conductive lines 1141, 1142 are arranged on opposite sides of the single conductor 112 forming the first electrically conductive structure. Preferably, the two lines 1141, 1142 extend in parallel in the sense that they are substantially equally spaced from the single conductor 112. The LDO supplying the reverse bias voltage for the photodiode is preferably located on the same die as the TIA and the DSP.

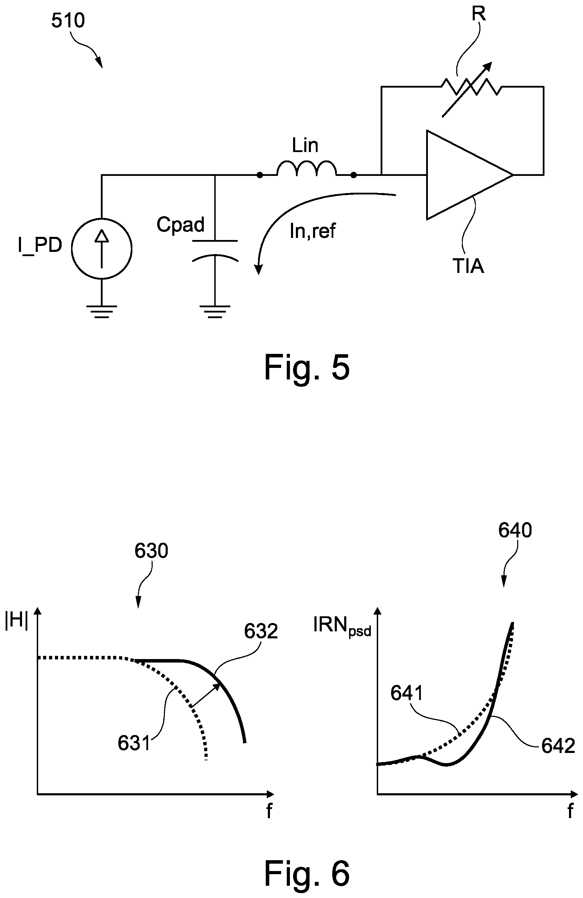

Fig. 5 shows a schematic diagram of an optical receiver 510 unit according to an exemplary embodiment. Fig. 5 serves to illustrate another problematic effect known as input referred noise, i.e. a noise current originating from the TIA itself. By designing the electrically conductive structures 112, 114 to cause a significant induction Lin at the input of the TIA, this noise current can be effectively blocked. A further beneficial effect of the inductance Lin is an increased TIA bandwidth. These further beneficial effects may be obtained by increasing the input impedance at the TIA above the customary 50Ω, such as to at least 80Ω, preferably more than 80Ω. Fig. 6 shows plots 630, 640 illustrating the improvements in bandwidth and input referred noise in an optical receiver unit according to an exemplary embodiment. As shown in plot 630, the TIA bandwidth may be improved by extending the essentially "flat" part of the frequency response from the typical curve 631 to the improved curve 632. As the skilled person will be aware, the relevant part of the frequency response may not be completely flat as there could be small peaking and dips. Similarly, as shown in plot 640, the input referred noise IRN may be kept lower along the improved curve 642 in comparison to the typical curve 641.

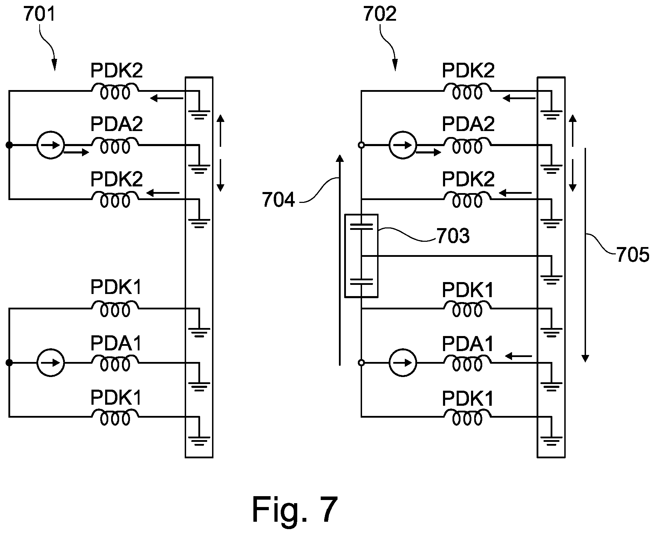

Fig. 7 shows a schematic diagram illustrating the impact of decaps at the photodiode cathode terminals in an optical receiver module according to an exemplary embodiment. More specifically, the diagram 701 shows the preferred embodiment without decaps, whereas the diagram 702 shows added decaps 703 at the photodiode cathode terminals PDK1, PDK2. Apart from requiring additional space, which is generally not available when integrating the TIA and DSP as described above, the decaps 703 would cause additional problematic currents as indicated by arrows 704, 705. Hence, there are several reasons to dispense with the use of decaps when implementing the present invention.

## Claims

1. An optical receiver unit (110), the unit comprising:
an anode terminal (PDA) configured to be connected to an anode of a photodiode,
a cathode terminal (PDK) configured to be connected to a cathode of the photodiode,
a transimpedance amplifier (TIA) having an input and an output,
a first electrically conductive structure (112) coupling the anode terminal to the input, and
a second electrically conductive structure (114) coupling the cathode terminal to a bias voltage supply (LDO), the second electrically conductive structure comprising two conductive lines (1141, 1142) extending on opposite sides of the first electrically conductive structure.

2. The unit according to the preceding claim, wherein the two conductive lines form two electrically parallel connections between the cathode terminal and the bias voltage supply.

3. The unit according to any one of the preceding claims, wherein a distance between each of the two conductive lines and the first electrically conductive structure is substantially the same.

4. The unit according to any one of the preceding claims, wherein each of the two conductive lines is configured to carry half the amount of current carried by the first electrically conductive structure.

5. The unit according to any one of the preceding claims, wherein one of the two conductive lines and the first electrically conductive structure form a first current loop, and the other one of the two conductive lines and the first electrically conductive structure form a second current loop.

6. The unit according to the preceding claim, wherein the first current loop and the second current loop have opposite directions.

7. The unit according to any one of the preceding claims, further comprising a digital signal processor configured to process a signal provided at the output of the transimpedance amplifier.

8. The unit according to the preceding claim, wherein the transimpedance amplifier and the digital signal processor form an integrated circuit, in particular an integrated CMOS circuit.

9. The unit according to any one of the preceding claims, wherein the transimpedance amplifier and the bias voltage supply are formed on the same die.

10. The unit according to any one of the preceding claims, wherein the bias voltage supply comprises a low-dropout regulator.

11. The unit according to any one of the preceding claims, wherein no grounding capacitor is provided at the cathode terminal.

12. The unit according to any one of the preceding claims, wherein the first electrically conductive structure and/or the second electrically conductive structure are configured to provide an impedance of at least 80Ω, said impedance having an inductive part configured to improve bandwidth and reduce input referred noise.

13. An optical receiver module comprising a plurality of optical receiver units according to any one of the preceding claims, wherein each optical receiver unit of the plurality of optical receiver units provide a corresponding channel.

14. The module according to the preceding claim, further comprising a plurality of photo diodes.

15. A method of manufacturing an optical receiver unit, the method comprising:
providing an anode terminal configured to be connected to an anode of a photodiode,
providing a cathode terminal configured to be connected to a cathode of the photodiode,
providing a transimpedance amplifier having an input and an output,
providing a first electrically conductive structure coupling the anode terminal to the input, and
providing a second electrically conductive structure coupling the cathode terminal to a bias voltage supply, the second electrically conductive structure comprising two conductive lines extending on opposite sides of the first electrically conductive structure.
